# EUROPÄISCHE PATENTSCHRIFT

(11) **EP 3 708 046 B1**
(45) Veröffentlichungstag und Bekanntmachung des Hinweises auf die Patenterteilung: **13.09.2023**
(21) Anmeldenummer: 20163424.3
(22) Anmeldetag: 16.03.2020
(51) Int. Cl.: A47J 37/06

(54) **VORRICHTUNG ZUM ERHITZEN UND/ODER GAREN VON LEBENSMITTELN**
DEVICE FOR HEATING AND/OR COOKING FOOD
DISPOSITIF DE CHAUFFAGE ET/OU DE CUISSON DE DENRÉES ALIMENTAIRES

(30) Priorität: 14.03.2019 DE 202019101468 U
(43) Veröffentlichungstag der Anmeldung: 16.09.2020
(73) Patentinhaber: reamotion GmbH, 27753 Delmenhorst (DE)
(72) Erfinder: Reales Bertomeo, Emilio, 27753 Delmenhorst (DE)
(74) Vertreter: Eisenführ Speiser

(56) Entgegenhaltungen:
- WO-A1-2007/042307
- WO-A1-2017/029037
- DE-U1-202017 101 922
- FR-A1- 2 688 993
- US-A- 4 785 725
- US-A- 5 154 161
- US-A1- 2008 202 349

## Beschreibung

Die Erfindung bezieht sich auf eine Vorrichtung zum Erhitzen und/oder Garen von Lebensmitteln, insbesondere von Fleischerzeugnissen und/oder Tiefkühlprodukten mit einem Gerätegehäuse mit mindestens einer Aufnahmeeinrichtung, wobei die Aufnahmeeinrichtung ein oder mehrere Aufnahmefächer aufweist, welche über wenigstens eine Öffnung im Gerätegehäuse zugänglich sind, und einen mit dem jeweiligen Aufnahmefach korrespondierenden in das oder aus dem Aufnahmefach einsetz- und entnehmbare Aufnahmebehälter für das Lebensmittel aufweist, und einer der Aufnahmeeinrichtung zugeordneten Heizeinrichtung mit einem oder mehreren Heizelementen.

Bei der Zubereitung von Lebensmitteln in der Schnellgastronomie werden unter anderem Fleischerzeugnisse, wie Bratwürste oder Burger-Scheiben, mithilfe von Grill- oder Brateinheiten und Tiefkühlprodukte, wie beispielsweise Pommes oder Kroketten, unter Verwendung einer offenen Fritteuse für den Verzehr zubereitet. Bei der üblichen Zubereitung entstehen aufgrund der Art der Zubereitung typischerweise fetthaltige und geruchsintensive Dämpfe. Im Bereich der Schnellrestaurants und Imbissbetriebe wird versucht mithilfe aufwendiger Absaug- und Filteranlagen die fetthaltigen Dämpfe und Gerüche abzuleiten beziehungsweise zu binden, um die Belastung durch die beim Zubereiten der Lebensmittel entstehenden Dämpfe und Gerüche zu minimieren.

Darüber hinaus sind die in den Schnellrestaurants und Imbissbetrieben zum Einsatz kommenden Grill- und Brateinrichtungen sowie die Fritteusen dauerhaft auf einem bestimmten, gleichbleibenden Temperaturniveau zu halten, um eine entsprechende schnelle Zubereitung gewährleisten zu können. Zum Halten derZubereitungseinrichtungen auf der nötigen Temperatur bedarf es jedoch einem hohen Energieaufwand. Ferner ist die Zubereitung von Lebensmitteln mit den üblichen bekannten Vorrichtungen zum Erhitzen und/oder Garen von Lebensmitteln durch das Servicepersonal zu überwachen bzw. zu kontrollieren. Dies ist notwendig, um die optimale Qualität bei der Zubereitung der Lebensmittel zu gewährleisten.

Aus DE 20 2014 005 299 U1 ist zum Beispiel eine Vorrichtung zum Garen der vorbezeichneten Gattung bekannt. Die Vorrichtung zum Erhitzen und/oder Garen von Lebensmitteln weist eine Aufnahmeeinrichtung zum Zubereiten von Fleischerzeugnissen und eine Aufnahmeeinrichtung zum Zubereiten von Tiefkühlprodukten auf. Die Aufnahmeeinrichtungen sind innerhalb des Gerätegehäuses übereinander angeordnet, wobei durch die Vorrichtung ein Heißluftstrom zum gleichmäßigen Garen der Lebensmittel geführt wird, um ein gleichmäßiges Erhitzen und/oder Garen der in den Aufnahmeeinrichtungen zuzubereitenden Lebensmittel umsetzen zu können. Der Energieaufwand bei dieser Art der Zubereitung ist zwar reduziert, jedoch noch vergleichsweise hoch, da der durch die Vorrichtung geleitete Luftstrom fortwährend auf einem vorbestimmten Temperaturniveau zu halten ist. Zudem lässt sich an der bekannten Vorrichtung nicht gänzlich vermieden, dass fetthaltige und geruchsintensive Dämpfe doch beim Entnehmen der zubereiteten Produkte aus der bekannten Vorrichtung nach außen austreten.

Ferner sind aus DE 20 2017 101 922 U1 oder US 4 785 725 A Vorrichtung zum Erhitzen oder Garen von Lebensmitteln mit einem Gerätegehäuse bekannt, umfassend mindestens einen Garraum für einen darin einzusetzenden Aufnahmebehälter, in dem Lebensmittel aufgenommen sind. Im Inneren der Vorrichtung ist eine Abluftreinigungseinrichtung zum Abführen, Herausfiltern der in der Vorrichtung entstehenden Dämpfe und dem Ausgeben eines gereinigten Abluftstromes aus dem Gehäuse vorgesehen.

WO 2017/029037 A1 oder WO 2007/042307 A1 offenbaren Dunstabzugshauben, die als separate Einheiten oberhalb eines Gargerätes angeordnet sind. Die Dunstabzugshauben sind über Abluftleitungen fluidleitend mit den Garräumen zum Abführen der beim Garen entstehenden Abluft verbunden und weisen den Garraumöffnungen zugeordnete Ansaugbereiche auf. Die Reinigung der abgeführten Abluft mittels Filterelementen erfolgt in der Dunstabzugshaube.

Der Erfindung lag die Aufgabe zugrunde, eine Vorrichtung zum Erhitzen und/oder Garen von Lebensmitteln anzugeben, mithilfe der eine vereinfachte und schonende Zubereitung von Lebensmitteln bei einem verringerten Energieaufwand und unter weitgehender Vermeidung einer Geruchsbelastung bei einer kompakten Ausgestaltung der Vorrichtung möglich ist.

Die Erfindung löst die ihr zugrundeliegende Aufgabe bei einer Vorrichtung zum Erhitzen und/oder Garen von Lebensmitteln der vorbezeichneten Gattung mit den Merkmalen von Anspruch 1.

Vorzugsweise ist mit Hilfe verschiedener Heizelemente, von denen eines als Strahlungsheizkörper und das andere als Konvektionsheizkörper ausgebildet ist, eine effiziente Erwärmung bzw. Zubereitung der Lebensmittel möglich. Bevorzugt tiefgekühlte Lebensmittel, wie beispielsweise Pommes Frites, können dadurch in verkürzter Zeit zubereitet werden. Bevorzugt ist der Garraum im Wesentlichen nach außen abgeschlossen, sodass die mittels der Heizelemente erzeugte Wärme nicht aus dem Garraum austritt, sondern effektiv für das Erwärmen des Lebensmittels genutzt werden kann. Zudem wird bevorzugt durch die Kombination der verschiedenen Heizelemente sichergestellt, dass die zuzubereitenden Lebensmittel zum einen gleichmäßig auf eine gewünschte Temperatur erhitzt werden und zum anderen, vorzugsweise mittels des Strahlungsheizkörpers, auf der Oberfläche ein ansprechendes Äußeres in Form einer typischen Braufärbung erhalten.

Eine Weiterbildung der erfindungsgemäßen Vorrichtung sieht vor, dass das erste Heizelement als Rohrheizkörper oder Infrarot-Strahler ausgebildet ist, wobei das Heizelement bevorzugt dazu eingerichtet ist, gezielt Strahlung in eine Richtung abzugeben. Der Infrarot-Strahler weist bevorzugt eine Plattenform auf. Damit ist eine großflächige Abstrahlung von Wärmeenergie in den Garraum bewirkt. Vorzugsweise ist das als Infrarot-Strahler ausgebildete Heizelement dazu eingerichtet, vornehmlich Wärme-Strahlung auf nur einem seiner Flächenbereiche abzugeben, nämlich der dem Garraum zugewandten Fläche des Infrarot-Strahlers. Dadurch wird eine effiziente Erwärmung des Lebensmittels im Garraum erzielt und eine direkte unerwünschte Erwärmung der den Garraum begrenzenden Wandung vermieden. Vorzugsweise weisen die plattenförmigen Heizelemente eine an die bevorzugt zylindrische Form des Garraumes angepasste, gekrümmte Form auf. Der Garraum und die plattenförmigen Heizelemente weisen ähnliche Krümmungsradien auf.

Vorzugsweise ist das zweite Heizelement als Heißluftgebläse ausgebildet, das innerhalb des Garraumes einen Umluftstrom erzeugt. Das Heißluftgebläse bewirkt somit eine gleichmäßige Verteilung der erzeugten Wärme innerhalb des Garraumes. Ein im Garraum befindliches Lebensmittel wird durch den Umluftstrom schneller und gleichmäßiger erwärmt. Durch die bevorzugt geschlossene Ausbildung des Garraumes ist trotz der im Garraum strömenden Umluft der Austritt der erzeugten Wärme aus dem Geräteinneren minimiert.

Eine Weiterbildung der erfindungsgemäßen Vorrichtung sieht zwei Garräume für zuzubereitende Lebensmittel vor, wobei jeder Garraum einen in den Garraum einsetz- und entnehmbaren Aufnahmebehälter für das Lebensmittel aufweist, wobei der Aufnahmebehälter vorzugsweise drehbar aufgenommen ist. Je nach Art des zu erhitzenden Lebensmittels weisen die Aufnahmebehälter unterschiedliche Formen auf, wobei in einer Ausführungsform der Erfindung ein Garraum mit dem darin aufzunehmenden Aufnahmebehälter zum Zubereiten von Fleischerzeugnissen, wie beispielsweise Bratwürsten oder Fleischpatties eingerichtet ist. Ein weiterer Garraum kann in dieser Ausführungsform zum Zubereiten von Tiefkühlprodukten wie beispielsweise Pommes Frites, vorgesehen sein. Bevorzugt weist ein solcher Garraum einen als Trommel ausgebildeten Aufnahmebehälter für das Lebensmittel auf, der in einen bevorzugt zylindrisch ausgebildeten Garraum eingesetzt wird. In einer weiteren Ausführungsform weist die erfindungsgemäße Vorrichtung zwei Garräume auf, welche jeweils zum Aufnehmen eines trommelförmigen Aufnahmebehälters eingerichtet sind. Bevorzugt weist die Vorrichtung zwei übereinander im Gerätegehäuse angeordnete zylindrische Garräume auf, welche in Abhängigkeit von den in den Garräumen zuzubereitenden Lebensmitteln individuell angesteuert und bedarfsgerecht geregelt werden können. Insbesondere sind die Aufnahmebehälter jeweils um ihre Längsachse drehbar in den Garräumen aufgenommen, wodurch das zuzubereitende Lebensmittel während des Erhitzens/Garens mittels des Aufnahmebehälters im Garraum bewegt wird.

Vorzugsweise ist im Bodenbereich des Garraumes oder unterhalb des Garraumes eine aus dem Gerätegehäuse zumindest teilweise entnehmbare Auffangwanne angeordnet. Insbesondere bei der Zubereitung der Lebensmittel entstehende oder aus dem Aufnahmebehälter herausfallende Rückstände sammeln sich auf der Auffangwanne im Bodenbereich des Garraumes. Diese Rückstände können über die aus dem Gerätegehäuse entnehmbare Auffangwanne einfach entfernt werden, wodurch das Reinigen der erfindungsgemäßen Vorrichtung vereinfacht ist Die Auffangwanne kann beispielsweise über eine Öffnung an der Front oder einem Seitenbereich des Gerätegehäuses herausgenommen werden. Die Auffangwanne wird bevorzugt in Richtung einer horizontal verlaufenden Ebene aus dem Gerätegehäuse entnommen bzw. in das Gerätegehäuse eingesetzt.

Bevorzugt ist ein den jeweiligen Garraum abdichtend verschließendes Verschlussteil vorgesehen, welches bevorzugt an dem Aufnahmebehälter für die Lebensmittel angeordnet ist. Jeder Garraum der erfindungsgemäßen Vorrichtung weist ein separates Verschlussteil zum Verschließen der zum Einsetzen und/oder Entnehmen des Aufnahmebehälters in den Garraum dienenden Öffnung auf. Insbesondere ist das Verschlussteil an dem Aufnahmebehälter für die Lebensmittel angeordnet und bildet bevorzugt einen Wandbereich des Aufnahmebehälters und des Gerätegehäuses aus. Das Verschlussteil hat somit eine Doppelfunktion, nämlich Verschließen des Aufnahmebehälters und Verschließen des Garraumes am Gerätegehäuse. Für eine bevorzugt hermetische Abriegelung des Garraumes ist es bevorzugt, an dem Verschlussteil wenigstens ein Dichtelement mit elastischen Eigenschaften, wie beispielsweise eine Dichtlippe anzuordnen. Mit dem Dichtelement am Verschlussteil ist der Energieverlust während des Garprozesses oder ein unerwünschtes Austreten von während des Garprozesses entstehenden Dämpfen aus dem Garraum zusätzlich behindert.

Gemäß einer weiteren bevorzugten Ausführungsform der erfindungsgemäßen Vorrichtung, weist das Gerätegehäuse ein oder mehrere Luftein- und/oder -auslässe auf und es sind ein oder mehrere mit den Luftein- und/oder -auslässen zusammenwirkende Lüfter zum Erzeugen eines Kühl-Luftstromes zwischen der Außenhaut des Gerätegehäuses und der oder den im Gerätegehäuse angeordneten Garräumen vorgesehen. Mit Hilfe des Kühlluftstroms im Inneren des Gerätegehäuses wird ein Wärmestau im Inneren der Vorrichtung vermieden, sodass die Außenseite des Gerätegehäuses trotz der hohen Temperatur innerhalb der Garräume das zulässige Temperaturniveau nicht überschreitet. Mögliche Verletzungen in Form von Verbrennungen durch eine die erfindungsgemäße Vorrichtung betätigenden Person werden vermieden. Ferner ist auch ein Schutz der innerhalb des Gerätegehäuses angeordneten, bevorzugt elektrischen Komponenten gegen Überhitzung erreicht.

Vorzugsweise sind mehrere Luftein- und/oder -auslässe in einem front- und rückseitigen Bereich und/oder einem Deckenbereich des Gerätegehäuses ausgebildet. Mit Hilfe der Luftein- und/oder -auslässe in der Front und der Rückseite der Vorrichtung ist eine Kühlluftströmung zwischen einander gegenüberliegenden Seiten des Gerätegehäuses bewirkt. Damit ist eine effektive Kühlung des Gehäuseinneren bewirkt. Mit dem Vorsehen von einer oder mehreren Öffnungen im Deckenbereich und gegebenenfalls im Boden des Gerätegehäuses können mehrere im Gerätegehäuse vorzugsweise quer zueinander verlaufende Luftströmungen für eine weiter verbesserte Kühlfunktion erzeugt werden. Vorzugsweise ist jedem der Luftein- und/oder -auslässe aufweisenden Bereiche im Gerätegehäuse ein Lüfter zugeordnet. Gemäß einer bevorzugten Weiterbildung der erfindungsgemäßen Vorrichtung ist vorgesehen, dass der oder die Lüfter an einer Innenseite der Gehäusewand des Gerätegehäuses angeordnet ist/sind, welche vorzugsweise mindestens einen Luftein- und/oder -auslass für den durch das Innere des Gehäuses insbesondere gesaugten Luftstrom aufweist. Mittels der auf der Innenseite des Gerätegehäuses angeordneten Lüfters wird beispielsweise Luft aus dem Inneren herausgesaugt bzw. Luft in das Innere des Gerätegehäuses eingeleitet. Vorzugsweise wird mittels des Lüfters im Deckenbereich des Gerätegehäuses, die natürliche Konvektion unterstützend, sich unterhalb des Deckenbereiches ansammelnde Wärme aus dem Gerätegehäuse in die Umgebung herausgesaugt.

Gemäß einer weiteren bevorzugten Ausführungsform der Erfindung sind innerhalb des Gerätegehäuses ein oder mehrere Leiteinrichtungen zum gezielten Führen des durch das Gerätegehäuse geleiteten Luftstromes und/oder eine Trennwand innerhalb des Gerätegehäuses angeordnet. Damit können sich kritisch auf eine erhöhende Temperatur reagierende Bereiche im Inneren des Gerätegehäuses gezielt mit einer kühlen Luftströmung versorgt werden. Das Überschreiten der kritischen Temperatur innerhalb der Vorrichtung und damit verbundene Ausfälle werden dadurch vermieden. Zudem sind die Garräume jeweils von einem Isolierwerkstoff eigehaust.

Gemäß der Erfindung ist der Garraum der Vorrichtung mit mindestens einer Abluftreinigungseinrichtung fluidleitend koppelbar, welche einen elektrostatischen Filter und eine Plasmakammer und einen Schwammfilter aufweist, die innerhalb eines Abluftkanals der Abluftreinigungseinrichtung angeordnet sind. Der Erfindung liegt die Erkenntnis zugrunde, mit Hilfe einer Abluftreinigungseinrichtung die beim Zubereiten der Lebensmittel entstehenden fetthaltigen und geruchsintensiven Dämpfe oder auch Rauchgase oder Rußpartikel unmittelbar im Anschluss an die Zubereitung als Abluft aus dem Garraum abzuführen und die Abluft vor dem Abgeben in die Umgebung zu reinigen. Beim Öffnen der Garräume bzw. beim Entnehmen der Aufnahmebehälter aus dem Garraum gelangen somit nahezu keine Dämpfe oder Partikel über die Einsetzöffnungen mehr in die Umgebung. Vorzugsweise wird das Abführen der Abluft aus den Garräumen mittels der Abluftreinigungseinrichtung bedarfsgerecht gesteuert. Dazu wird während des Zubereitens der Lebensmittel der Abluftstrom aus den Garräumen unterbrochen. Erst mit Beendigen des Zubereitungs- bzw. Garvorganges wird die Abluft bevorzugt abgesaugt.

Das Steuern des Abluftstromes erfolgt zum Beispiel über einen Ventilator der Abluftreinigungseinrichtung derwährend der Lebensmittel-Zubereitung ausgeschaltet wird. Gemäß der Erfindung ist der elektrische Filter und/oder die Plasmakammer und/oder der Schwammfilter aus dem Abluftkanal der Abluftreinigungseinrichtung entnehmbar. Der elektrostatische Filter und/oder die Plasmakammer und der Schwammfilter können einfach aus dem Abluftkanal entnommen und entweder, sofern deren Betriebsstunden erreicht sind, ausgetauscht oder, wenn möglich, gereinigt werden. Damit kann die Effektivität der Abluftreinigungseinrichtung wieder auf einfache Weise hergestellt werden, sodass bei der erneuten Zubereitung der Lebensmittel entstehende Dämpfe beim Abführen des Abluftstroms sicher herausgefiltert werden können. Vorzugsweise weist der elektrostatische Filter Plattenelemente aus einem Metall mit nichtkorrodierenden Eigenschaften, wie beispielsweise Stahl, vorzugsweise Edelstahl, auf. Die Plattenelemente lassen sich beispielsweise mittels Plasma bevorzugt elektrisch aufladen, insbesondere elektrisch negativ aufladen. Gas- und Rußpartikel, die mit dem Abluftstrom durch den elektrostatischen Filter geleitet werden, haften an den negativ aufgeladenen Plattenelementen an. Das Reinigen des Edelstahl-Filters kann mit Hilfe eines Geschirrspülers erfolgen, mittels dem sich die Partikel wieder von den Plattenelementen lösen lassen.

Bevorzugt ist der Schwammfilter in Strömungsrichtung der Abluft dem elektrostatischen Filter vorgeschaltet, wodurch bereits ein Großteil der im Abluftstrom enthaltenen Partikel-Rückstände oderfetthaltigen Dämpfe vor Eintritt des Abluftstromes in den elektrostatischen Filter herausgefiltert werden. Dadurch wird die Effektivität des elektrostatischen Filters erhöht, was die Effizienz der Abluftreinigungseinrichtung insgesamt weiter verbessert. Gemäß der Erfindung ist die Abluftreinigungseinrichtung fester Bestandteil der Vorrichtung und innerhalb des Gerätegehäuses angeordnet. Gemäß einer bevorzugten Ausgestaltung der Erfindung ist die Abluftreinigungseinrichtung in einem von dem mindestens einen Garraum abgetrennten Bereich des Gerätegehäuses angeordnet. Um die während des Zubereitens der Lebensmittel entstehende Wärme von der Ablufteinrichtung fernzuhalten, ist es vorgesehen, die Abluftreinigungseinrichtung im Gehäuse von den Garräumen zu separieren. Das kann beispielsweise über eine innerhalb des Gerätegehäuses vertikal angeordnete Trennwand erfolgen. Die Trennwand weist zumindest Öffnungen für den durch das Gerätegehäuse geleiteten Kühlluftstrom auf.

In einer bevorzugten Ausgestaltung der Erfindung ist innerhalb des Abluftkanales eine Plasmakammer zum Reinigen der aus dem Aufnahmefach oder den Aufnahmefächern abgeführten Abluft angeordnet. Innerhalb der Plasmakammer erfolgt bevorzugt eine lonisation der durch die Plasmakammer geführten Abluft. Die Plasmakammer ist vorzugsweise dem elektrostatischen Filter nachgeschaltet. In die Plasmakammer eingeleitete Abluft, insbesondere darin enthaltene Bestandteile, wie kleinste Fettpartikel, oder Öle werden so umgewandelt, dass im Abluftkanal nach der Plasmakammer vornehmlich Sauerstoff, Kohlendioxid und Wasserdampf Bestandteile der behandelten Abluft bilden. Mithilfe der im Abluftkanal zum Einsatz kommenden Plasmakammer wird die Abluft von bis zu 80% der darin enthaltenen nicht erwünschten Bestandteile gereinigt, vorzugsweise bis zu 98% der nicht erwünschten Bestandteile. Die das Gerätegehäuse verlassende Abluft ist damit nahezu vollständig gereinigt, wodurch die Belastung der Umgebungsluft auf ein Minimum reduziert ist.

Bevorzugt ist innerhalb des Abluftkanales ein der Plasmakammer vorgeschalteter Luftverwirbler zum Durchmischen der Abluft und vorzugsweise zum Beimischen von Umgebungsluft aus dem Gehäuseinneren angeordnet, wobei vorzugsweise in der Wandung des Gerätegehäuses wenigstens ein Ventilator zum Einleiten von Umgebungsluft in das Gerätegehäuse angeordnet ist. Mithilfe des innerhalb des Abluftkanales angeordneten Luftverwirblers wird in einer Ausführungsform die aus den Aufnahmefächern der Vorrichtung abgeführte Abluft derart im Abluftkanal verwirbelt, dass über den Querschnitt des Abluftkanales ein gleichmäßiges Temperaturniveau herrscht. Darüber hinaus sollen Temperaturen von über 50°C, bevorzugt über 45°C innerhalb des Abluftkanales vermieden werden, bevor die Abluft in die Plasmakammer eintritt, womit der Wirkungsgrad der Plasmakammer verbessert ist. Vorzugsweise hat die Plasmakammer ihren höchsten Wirkungsgrad, wenn die in die Plasmakammer eingeleitete Abluft eine Temperatur von weniger 45°C aufweist.

Dem Abluftkanal ist eine Einrichtung zum Steuern von zumindest der aus dem oder den Aufnahmefächern abzuführenden Abluft zugeordnet. Mithilfe der Einrichtung zum Steuern der Abluft wird vorzugsweise in der einfachsten Ausgestaltung der Steuereinrichtung für die Abluft der durch den Abluftkanal strömende Massenstrom durch Verändern der Ventilatordrehzahl angepasst. In einer anderen Ausgestaltung der Erfindung ist vorgesehen, dass die Steuereinrichtung für die Abluft, nach erfolgter Zubereitung der Lebensmittel in dem jeweiligen Garraum, eine fluidleitende Verbindung zwischen dem Abluftkanal und dem oder den Garräumen herstellt. In einer weiteren Ausführungsform ist die Steuereinrichtung dazu eingerichtet, die verschiedenen Garräume für die Lebensmittel einzeln oder auch gemeinsam fluidleitend mit dem Abluftkanal zu verbinden beziehungsweise die fluidleitende Verbindung vor Beginn des nächsten Garvorganges wieder zu unterbrechen. Mittels der Einrichtung zum Steuern der Abluft ist in einer Ausführungsform gewährleistet, dass die Garäume für die darin einzusetzenden Aufnahmebehälter während des Zubereitungsvorganges der Lebensmittel zur Ausbildung des nach außen hin geschlossenen Garraumes unter Verwendung geeigneter Abtrenn- oder Schließmittel im Verbindungsbereich zum Abluftkanal abdichten verschlossen sind.

Eine Weiterbildung der erfindungsgemäßen Vorrichtung sieht vor, dass die Einrichtung zum Steuern der Abluft wenigstens eine ansteuerbare Abluftklappe aufweist, mittels der wenigstens eine mit dem Abluftkanal verbundene Auslassöffnung am Garraum öffenbar und verschließbar ist. Vorzugsweise ist ferner eine ansteuerbare Zuluftklappe vorgesehen, mittels der zumindest eine über einen Zuluftkanal mit der Umgebung verbundene Einlassöffnung am Garraum zum Einbringen von Frischluft in den Garraum öffenbar und verschließbar ist. Das Vorsehen einer Abluftklappe und einer Zuluftklappe an einem jeweiligen Garraum ermöglicht das einfache Steuern des Abführens der Abluft in die Abluftreinigungseinrichtung. Durch das Zuführen von Frischluft in den Garraum wird der Luftaustausch innerhalb des Garraumes begünstigt. Ein sich nachteilig auswirkender Unterdruck im Aufnahmefach ist zudem vermieden. Vorzugsweise weisen die Garräume für die zu erhitzenden beziehungsweise garenden Lebensmittel jeweils separat ansteuerbare Abluftklappen und/oder Zuluftklappen auf. Die Abluft- und Zuluftklappen sind vorzugsweise über entsprechende Antriebs- oder Stelleinrichtungen ansteuer- bzw. betätigbar, mittels denen die Abluft- und/oder Zuluftklappen in ihre jeweilige Offenbeziehungsweise Geschlossenstellung gebracht werden.

In einer anderen Weiterbildung der erfindungsgemäßen Zubereitungsvorrichtung ist innerhalb des Abluftkanales in Strömungsrichtung hinter der Plasmakammer eine Filtereinrichtung, vorzugsweise ein Aktivkohlefilter angeordnet. Die Filtereinrichtung wird bevorzugt dazu verwendet, um mögliche verbliebene restliche Bestandteile, die innerhalb der Plasmakammer nicht umgewandelt werden konnten, aus der Abluft herauszufiltern.

Vorzugsweise wird ein Aktivkohlefilter verwendet, der einen bevorzugt hohen Wirkungsgrad beim Filtern von molekularen Bestandteilen innerhalb eines Abluftstromes erzielt. Zudem ist über die Ausgestaltung der Filtereinrichtung als Aktivkohlefilter erreicht, dass möglicherweise innerhalb der Plasmakammer entstehendes Ozon, das mit dem gereinigten Abluftstrom die Plasmakammer verlässt, in den Aktivkohlefilter übergeleitet wird, dort gebunden und in nichtschädliche Bestandteile umgewandelt wird. Das Überleiten von Ozon in die Filtereinrichtung bewirkt ferner die Selbstreinigung des Aktivkohlefilters. Damit sind die Standzeiten der der Plasmakammer nachgeschalteten Filtereinrichtung im Vergleich zu herkömmlichen Filtereinrichtungen derart verbessert, dass das Mehrfache der üblichen Standzeiten an der erfindungsgemäßen Vorrichtung erreicht wird. In einer Ausführungsform der Erfindung können dem Aktivkohlefilter Duftpads zugeordnet sein, die bei Passieren durch die Abluft einen Duftstoff an die Abluft abgeben.

Gemäß der Erfindung ist ferner eine der Öffnung im Gerätegehäuse zugeordnete Front-Absaugeinrichtung zum Absaugen von aus der Öffnung austretenden Dämpfen vorgesehen. Etwaige im Garraum verbliebene Zubereitungsdämpfe, die nicht durch die Abluftreinigungseinrichtung aus dem Garraum abgeführt werden konnten und somit beim Entnehmen des zubereiteten Lebensmittels aus der Entnahmeöffnung an der Front des Gerätegehäuses entweichen, werden mit Hilfe der Front-Absaugeinrichtung aufgefangen. Die Zubereitung der Lebensmittel wird dadurch nahezu geruchsfrei, was den Einsatz der erfindungsgemäßen Zubereitungsvorrichtung an Orten ermöglicht, an denen eine Geruchsbelästigung durch Zubereitungsdämpfe unerwünscht ist.

Erfindungsgemäß ist die Front-Absaugeinrichtung fluidleitend mit der Abluftreinigungseinrichtung gekoppelt. Auch die an der Front des Gerätegehäuses austretenden Dämpfe werden als Abluft über die innerhalb des Gerätegehäuses oder separat zum Gerätegehäuse ausgebildet Abluftreinigungseinrichtung geleitet und entsprechend gereinigt. Damit wird eine nahezu geruchsfreie Zubereitung von Fleischerzeugnissen, wie beispielsweise Bratwürsten oder Fleischpatties, sowie Tiefkühlprodukten, wie Pommes Frites oder vorfrittiertem Gemüse, möglich. Die erfindungsgemäße Zubereitungseinrichtung kann somit auch beispielsweise in Aufenthaltsräumen eines Betriebes aufgestellt und für die Zubereitung von Lebensmitteln verwendet werden, ohne dass eine Geruchsbelästigung durch Zubereitungsdämpfe auftritt. Bevorzugt ist die Front-Absaugeinrichtung als eine an der Oberseite des Gerätegehäuses angeordnete Absaughaube ausgebildet. Bevorzugt weisen Bereiche des Gerätegehäuses, insbesondere zumindest die Front des Gerätegehäuses, eine vorzugsweise horizontal daran abstehende Abzugshaube auf, über die die aus der Öffnung am Gerätegehäuse austretenden und üblicherweise nach oben aufsteigenden Dämpfe aufgefangen werden. Gemäß einer bevorzugten Weiterbildung weist die Front-Abzugseinrichtung ein Auffangteil auf, welches an der die Öffnungen zu den Garräumen aufweisenden Front und vorzugsweise an den Längsseiten des Gerätegehäuses absteht. Das Auffangteil der Abzugshaube erstreckt sich bevorzugt über die gesamte Front des Gerätegehäuses und zumindest abschnittsweise entlang der Längsseiten des Gerätegehäuses. Das Auffangteil ist ähnlich einer Auffangrinne ausgebildet, welche an der Oberseite des Gerätegehäuses mit ihrer Absaugöffnung nach unten in Richtung der darunterliegenden Öffnungen an der Front des Gerätegehäuses ausgerichtet ist. Das Auffangteil kann auch rohrartig mit mehreren im Abstand zueinander angeordnete Einlässe ausgebildet sein. Das Auffangteil ist vorzugsweise über eine Sammelleitung mit der Abluftreinigungseinrichtung verbunden.

Die Erfindung wird im Folgenden anhand eines bevorzugten Ausführungsbeispiels unter Bezugnahme auf die nachfolgenden Figuren näher beschriebenen. Hierbei zeigen:
- Fig. 1:: eine perspektivische Ansicht einer nicht erfindungsgemässen Zubereitungsvorrichtung für Lebensmittel;
- Fig. 2:: eine Teilansicht in das Innere der nicht erfindungsgemässen Vorrichtung nach Fig. 1 mit teilweise entfernter Seitenwand des Gerätegehäuses;
- Fig. 3:: eine perspektivische Ansicht einer nicht erfindungsgemässen Vorrichtung mit einer außerhalb des Gerätegehäuses angeordneten Abluftreinigungseinrichtung; und
- Fig. 4:: eine perspektivische Ansicht einer erfindungsgemäßen Vorrichtung nach Fig. 1 mit einer an der Oberseite der Vorrichtung angeordneten erfindungsgemäßen Front-Absaugeinrichtung.

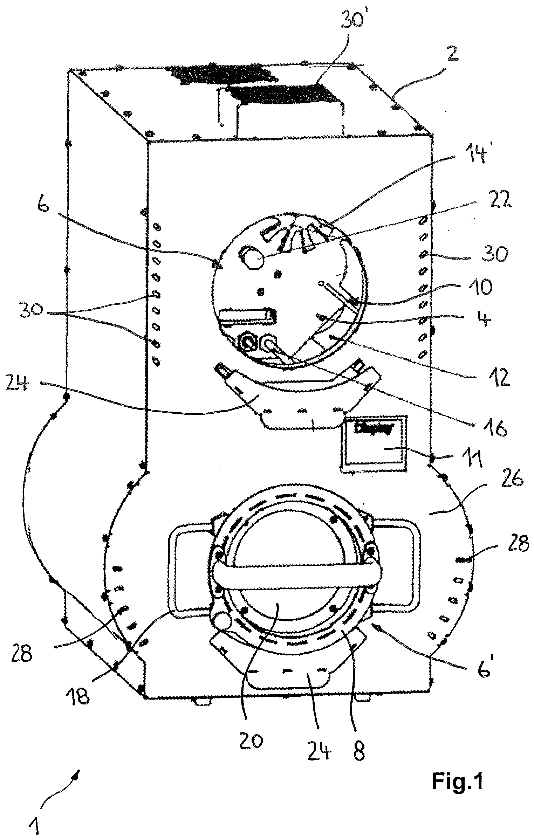

Fig. 1 zeigt eine nicht erfindungsgemässe Vorrichtung 1 zum Erhitzen und/oder Garen von Lebensmitteln insbesondere von Fleischerzeugnissen und/oder Tiefkühlprodukten. Die Vorrichtung 1 umfasst ein Gerätegehäuse 2, in dem zwei Garräume 4 für die zuzubereitenden Lebensmittel vorgesehen sind. Das Gerätegehäuse 2 weist jeweils eine Öffnung 6, 6' als Zugang zu dem jeweiligen Garraum 4 auf. Über die Öffnung 6, 6' ist ein Aufnahmebehälter 8 in den oder aus dem Garraum 4 einsetz- und entnehmbar. Jeder der Garräume 4 weist eine Heizeinrichtung 10 auf, mittels der die benötigte Wärmeenergie innerhalb des Garraumes 4 für die Zubereitung der Lebensmittel erzeugt wird. An der Vorrichtung 1 ist ein Display 11 zum Steuern der mit der Vorrichtung umsetzbaren Garprozesse.

Die Heizeinrichtung 10 umfasst in der gezeigten Ausführungsform ein erstes Heizelement 12, welches als Infrarot-Strahler ausgebildet ist und ein zweites Heizelement 14, welches ein Heißluftgebläse mit mindestens einem Lüfterrad 14' aufweist. Zudem ist ein Rohrheizkörper als weiteres Heizelement 16 im Garraum 4 angeordnet. Der in den Garraum 4 einsetzbare Aufnahmebehälter 8 ist als Trommel ausgebildet, der zwei Handgriffe 18 zum Einsetzen und Entnehmen aus dem Garraum 4 aufweist. Der Aufnahmebehälter 8 ist ferner über einen nicht näher gezeigten mit der Stirnseite der Trommel koppelbaren Verschlussteil 20 verschließbar. Das Verschlussteil 20 bildet zugleich einen Wandbereich des Aufnahmebehälters 8 wie auch einen Bereich des Gerätegehäuses 2 aus. Der Aufnahmebehälter 8 wird über den Drehantrieb 22 innerhalb des Garraumes 4 in eine Drehbewegung versetzt. Sämtliche Funktionen der Vorrichtung 1 werden mittels einer nicht näher beschriebenen elektronischen Steuerung verwirklicht, die mit sämtlichen Bauteilen der Vorrichtung 1 signalleitend verbunden ist.

In der in Fig. 1 gezeigten Ausführung ist unterhalb jedes Garraumes 4 eine aus dem Gerätegehäuse 2 zumindest teilweise entnehmbare Auffangwanne 24 für Lebensmittelrückstände bzw. Flüssigkeiten angeordnet, die bei der Zubereitung der Lebensmittel entstehen. Die Auffangwannen 24 sind in dieser gezeigten Ausführung von der Front 26 des Gerätegehäuses aus zugänglich. Das Verschlussteil 20 wie auch die Auffangwanne 24 sind bevorzugt abdichtend zum Gerätegehäuse ausgebildet, wobei das Verschlussteil 20 wie auch die Auffangwanne 24 wenigstens ein Dichtelement aufweisen, das im Bereich der Öffnung 6 für den Aufnahmebehälter 8 oder der Auffangwanne 24 gegenüber dem Gerätegehäuse 2 abdichtet.

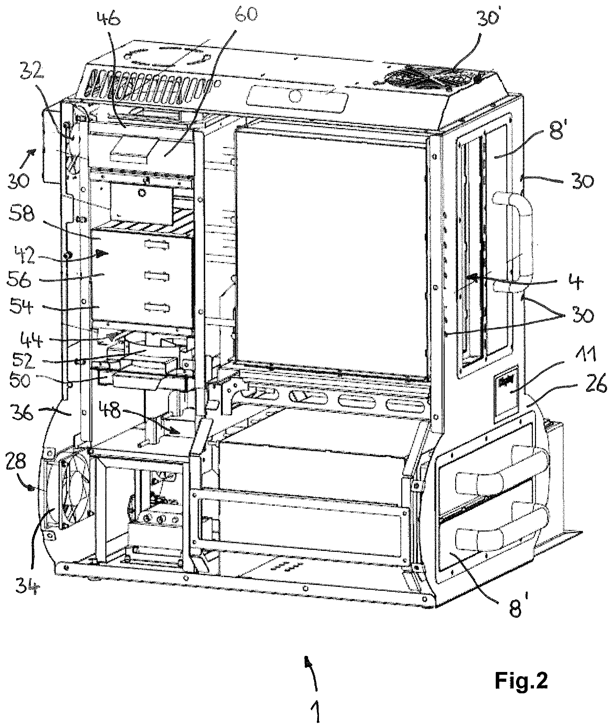

Wie ferner aus den Fig. 1 und 2 ersichtlich, weist die Vorrichtung 1 am Gerätegehäuse 2 ein oder mehrere Luftein- und/oder -auslässe 28, 30 auf, die mit einem oder mehreren Lüftern 32, 34 zum Erzeugen eines Kühlluftstromes zwischen der Innenseite des Gerätegehäuses und der oder den im Gerätegehäuse angeordneten Garräumen 4 zusammenwirken. Mehrere Luftein- und/oder -auslässe sind an der Front 26 und der Rückwand 36 des Gerätegehäuses 2 ausgebildet. In der gezeigten Ausführung, siehe Fig. 1 und 2, ist ein weiterer Luftein- oder -auslass 30' im Deckenbereich des Gerätegehäuses 2 ausgebildet, dem ein weiterer Lüfter zugeordnet ist. Mittels des Lüfters wird eine Luftströmung in vertikaler Richtung zwischen der Innenseite des Gehäuses und den Garräumen 4 erzeugt wird.

Fig. 2 zeigt eine weitere Ausführungsform einer nicht erfindungsgemässen Vorrichtung 1 zum Zubereiten von Lebensmitteln, die entgegen der in Fig. 1 abgebildeten Ausführung anstelle von zwei vertikal übereinander angeordneten Aufnahmebehältern 8 mehrere Garräume 4 aufweist, in die als Einsetzkassetten ausgebildete Aufnahmebehälter 8' eingesetzt werden. Mit solchen Einsetzkassetten werden vorzugsweise Bratwürste oder Fleischpatties gegart. In einer nicht näher gezeigten Ausführungsform weist eine solche Einsetzkassette vier Aufnahmefächer für je einen Fleischpatty auf. Die Aufnahmefächer sind in einer Ebene verlaufend so nebeneinander ausgerichtet, dass in den Aufnahmebehältern 8' eine 2 x 2-Anordnung ausgebildet wird.

Wie Fig. 2 verdeutlicht, sind der oder die Lüfter 32, 34 an einer Innen- oder Außenseite der Rückwand 36 des Gerätegehäuses 2 angeordnet. Überdie Lüfter32 an der Außenseite der Rückwand 36 im oberen Bereich des Gerätegehäuses wird Luft aus dem Inneren in die Umgebung abgeführt. Die Lüfter 34 im Bodenbereich des Gehäuses an der Innenseite der Rückwand 36 leiten Luft aus der Umgebung in das Innere des Gehäuses ein. Innerhalb des Gerätegehäuses 2 kann eine Leiteinrichtung zum Führen des Kühlluftstromes durch das Gerätegehäuse bzw. mindestens eine etwa vertikal verlaufende Trennwand angeordnet sein.

Fig. 2 zeigt weiter eine Abluftreinigungseinrichtung 42 mit einem Abluftkanal 44 zum Abführen von Abluft aus den Garräumen, der mit den Garräumen 4 fluidleitend koppelbar ist. Zum Herausführen der Abluft aus den Garräumen 4 ist am oberen Ende des Abluftkanals 44 ein Ventilator 46 angeordnet. Der Ventilator 46 ist dazu eingerichtet, die Abluft aus den Garräumen abzusaugen. Dem Abluftkanal 44 ist eine Einrichtung 48 zum Steuern der aus den Garräumen 4 abzuführenden Abluft zugeordnet, mittels der während des Betriebs der Vorrichtung 1 die fluidleitende Verbindung zwischen dem Abluftkanal 44 und den Garräumen 4 unterbrochen wird. Beim Erhitzen bzw. Garen der Lebensmittel kann die benötigte Wärmeenergie nicht unbeabsichtigt aus den Garräumen 4 in den Abluftkanal entweichen.

Gemäß einer bevorzugten Ausführungsform weist die Steuerung 48 fürdie Abluft eine nicht näher gezeigte ansteuerbare Abluftklappe auf, mittels der ein mit dem Abluftkanal 44 verbundener Auslass an dem Garraum 4 geöffnet oder verschlossen werden kann. In einer nicht näher gezeigten Ausführung umfasst die Steuerung 48 ansteuerbare Zuluftklappen, welche Einlässen an den Garräumen 4 zugeordnet sind. Bei geöffneten Zuluftklappen kann Frischluft über die Einlässe in den Garraum einströmen.

Ferner ist aus Fig. 2 der Aufbau des Abluftkanals 44 mit seinen darin angeordneten Bauteilen verdeutlicht. Im Abluftkanal 34 ist in Strömungsrichtung der Abluft zuerst ein Fettfilter 50 zur Vorfilterung der aus den Garräumen 4 abgesaugten Abluft angeordnet. In Strömungsrichtung hinter dem Fettfilter 50 ist ein Luftverwirbler 52 angeordnet, der die Abluft mit Frischluft aus dem Gerätegehäuse vermischt. Über den Querschnitt des Abluftkanals wird damit ein verringertes und gleichmäßiges Temperaturniveau erzeugt. Dem Luftverwirbler 52 ist ein Schwammfilter 54 nachgeordnet, der einen Großteil der in der Abluft befindlichen fetthaltigen Rückstände herausfiltert. In Strömungsrichtung hinter dem Schwammfilter ist ein elektrostatischer Filter 56 angeordnet, der dazu eingerichtet ist, Rußpartikel sowie Rauchgase zu binden. In einer Ausführungsform weist der elektrostatische Filter 56 mehrere nicht näher gezeigte z.B. durch Elektrostatische Ladung oder Hochspannung oder durch Plasma elektrisch negativ aufladbare Plattenelemente aus Stahl, beispielsweise Edelstahl auf. Vorzugsweise oberhalb des elektrostatischen Filters 56 ist eine Plasmakammer 58 zum Reinigen der Abluft angeordnet, innerhalb der eine lonisation der hindurchgeführten Abluft erfolgt. In der Abluft mitgetragene Fett- und Geruchsmoleküle werden innerhalb der Plasmakammer 58 effektiv zersetzt. Der Plasmakammer 58 nachgeschaltet ist eine weitere Filtereinrichtung 60, insbesondere ein Aktivkohlefilter, mit der restliche in der Abluft verbliebene unerwünschte Bestandteile nahezu vollständig herausgefiltert werden. Alternativ oder zusätzlich zu der Plasmakammer kann erfindungsgemäß auch vorgesehen sein eine Lichtbehandlungskammer, in welcher beispielsweise mittels ultraviolettem Licht das Abgas gereinigt wird.

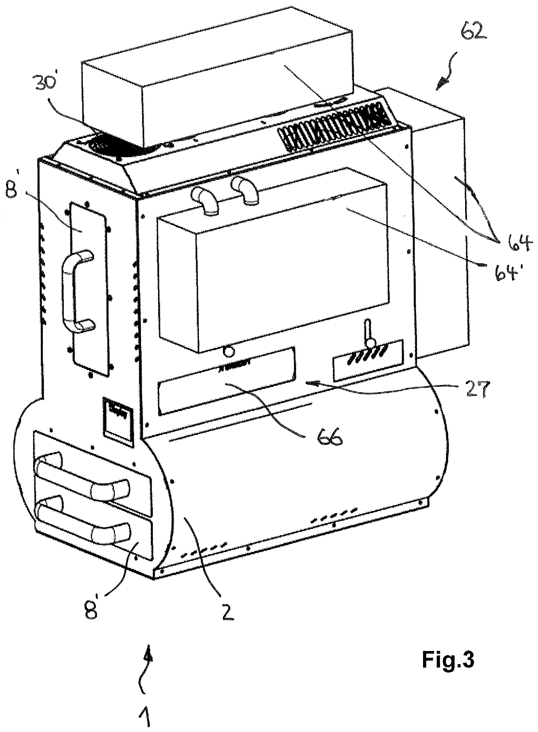

Fig. 3 zeigt eine weitere nicht erfindungsgemässe Vorrichtung 1 mit Garräumen, in die als Einsetzkassetten ausgebildete Aufnahmebehälter 8' eingesetzt werden. Im Gegensatz zu der in Fig. 2 gezeigten Ausführungsform weist die Vorrichtung in Fig. 3 eine Abluftreinigungseinrichtung 62 auf, welche außerhalb des Gerätegehäuses 2 angeordnet ist. Die Abluftreinigungseinrichtung 62 ist in mehreren verschiedenen Gehäusen 64, 64' untergebracht, wobei die Abluftreinigungseinrichtung 62 dieselben Bauteile umfasst wie die Abluftreinigungseinrichtung 42 in Fig. 2 innerhalb des Gerätegehäuses. Die verschiedenen Gehäuse 64, 64' der Abluftreinigungseinrichtung 62 sind über mehrere nicht näher gezeigte, die Abluft führende Abluft-Leitungen miteinander verbunden. Ferner weist die in Fig. 3 gezeigte Ausführung eine Auffangwanne 66 für entstehende Lebensmittelrückstände auf, welche über eine Öffnung an der Längsseite 27 des Gerätegehäuses 2 entnehmbar ist.

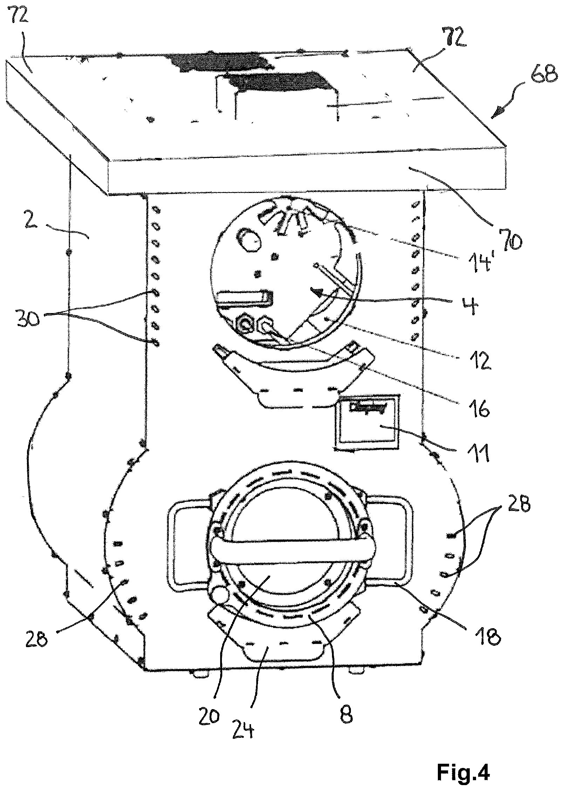

Fig. 4 zeigt eine erfindungsgemässe Ausführungsform auf Basis der in Fig. 1 gezeigten Vorrichtung 1 zum Erhitzen und/oder Garen von Lebensmitteln. Die in Fig. 4 gezeigte Ausführungsform umfasst eine Front-Absaugeinrichtung 68, welche an der Oberseite des Gerätegehäuses 2 angeordnet ist. Die Absaugeinrichtung 68 ist zum Absaugen von aus der oder den Öffnungen 6, 6' an der Front 26 des Gerätegehäuses austretenden Dämpfen eingerichtet. Die Front-Absaugeinrichtung 68 steht an der Front 26 und entlang der Längsseiten 27 des Gerätegehäuses im Wesentlichen in horizontaler Richtung vor. Die Absaugeinrichtung 68 bildet an der Oberseite des Gerätegehäuses eine Abzugshaube aus. In der vorliegenden Ausführung ist die Front-Absaugeinrichtung 68 fluidleitend mit der Abluftreinigungseinrichtung 42 (Fig. 2) gekoppelt.

Die Front-Absaugeinrichtung 68 weist mindestens ein als eine Art Auffangrinne ausgebildetes Auffangteil 70 auf, das eine oder mehrere in Richtung der Öffnungen 6, 6' weisende Einlässe zum Abführen von Dämpfen hat. In einer bevorzugten Ausführungsform weist die Front-Absaugeinrichtung 68 an den hinteren Enden der sich parallel zu den Längsseiten 27 des Gerätegehäuses 2 erstreckenden Schenkeln des Auffangteiles 70 in Richtung des Gerätegehäuses weisende, nicht näher abgebildete Auslässe für eine Verbindung in Richtung der Abluftreinigungseinrichtung im Inneren des Gerätegehäuses 2 auf.

### Bezugszeichen

- 1: Vorrichtung
- 2: Gerätegehäuse
- 4: Garraum
- 6, 6`: Öffnung
- 8, 8`: Aufnahmebehälter
- 10: Heizeinrichtung
- 11: Display
- 12: Heizelement
- 14: Heizelement
- 14': Lüfterrad
- 16: Rohrheizkörper
- 18: Handgriff
- 20: Verschlussteil
- 22: Drehantrieb
- 24: Auffangwanne
- 26: Front
- 27: Längsseite
- 28, 30: Luftein-/auslass
- 32, 34: Lüfter
- 36: Rückwand
- 38: Deckenbereich
- 40: Luftauslass
- 42: Abluftreinigungseinrichtung
- 44: Abluftkanal
- 46: Ventilator
- 48: Steuerung
- 50: Fettfilter
- 52: Luftverwirbler
- 54: Schwammfilter
- 56: elektrostatischer Filter
- 58: Plasmakammer
- 60: Filtereinrichtung
- 62: Abluftreinigungseinrichtung
- 64, 64`: Gehäuse
- 66: Auffangwanne
- 68: Absaugeinrichtung
- 70: Auffangteil
- 72: Schenkel

## Patentansprüche

1. Vorrichtung (1) zum Erhitzen und/oder Garen von Lebensmitteln, insbesondere von Fleischerzeugnissen und/oder Tiefkühlprodukten, mit
einem Gerätegehäuse (2),
wobei das Gerätegehäuse (2) wenigstens einen Garraum (4) für das Lebensmittel aufweist, welche über wenigstens eine Öffnung (6, 6') im Gerätegehäuse (2) zugänglich sind, und einen mit dem jeweiligen Garraum (4) korrespondierenden in den oder aus dem Garraum einsetz- und entnehmbaren Aufnahmebehälter (8) für das Lebensmittel aufweist, und
einer dem Garraum (4) zugeordneten Heizeinrichtung (10) mit einem oder mehreren Heizelementen (12, 14, 16),
wobei der Garraum (4) mit mindestens einer Abluftreinigungseinrichtung (42, 62) fluidleitend koppelbar ist, welche innerhalb des Gerätegehäuses (2) angeordnet ist und eine Einrichtung (48) zum Steuern von zumindest der aus dem oder den Garräumen (4) abzuführenden Abluft aufweist,
**dadurch gekennzeichnet, dass** die Abluftreinigungseinrichtung (42, 62) einen elektrostatischen Filter (56), eine Plasmakammer (58) und einen Schwammfilter (54) aufweist, die innerhalb eines Abluftkanals (44) der Abluftreinigungseinrichtung (42, 62) angeordnet sind, wobei der elektrostatische Filter (56) und/oder die Plasmakammer (58) und/oder der Schwammfilter (54) aus dem Abluftkanal (44) entnehmbar sind, und
dass zumindest eine den Öffnungen (6, 6`) im Gerätegehäuse (2) zugeordnete Front-Absaugeinrichtung (68) zum Absaugen von aus der Öffnung (6, 6`) austretenden Dämpfen vorgesehen ist, welche fluidleitend mit der Abluftreinigungseinrichtung (62) im Gerätegehäuse (2) gekoppelt ist.

2. Vorrichtung nach Anspruch 1,
**dadurch gekennzeichnet, dass** der elektrostatische Filter (56) mehrere elektrisch aufladbare Plattenelemente aus Metall mit nicht korrodierenden Eigenschaften aufweist.

3. Vorrichtung nach Anspruch 1 oder 2,
**dadurch gekennzeichnet, dass** der Schwammfilter (54) in Strömungsrichtung der Abluft dem elektrostatischen Filter (56) vorgeschaltet ist.

4. Vorrichtung nach einem der vorstehenden Ansprüche,
**dadurch gekennzeichnet, dass** die Abluftreinigungseinrichtung (42, 62) in einem von dem mindestens einen Garraum (4) abgetrennten Bereich des Gerätegehäuses (2) angeordnet ist.

5. Vorrichtung nach Anspruch 4,
**dadurch gekennzeichnet, dass** die Einrichtung (48) zum Steuern der Abluft wenigstens eine ansteuerbare Abluftklappe aufweist, welche dazu eingerichtet ist, wenigstens eine mit dem Abluftkanal (44) verbundene Auslassöffnung am Garraum (4) zu öffnen und zu schließen.

6. Vorrichtung nach einem der Ansprüche 1 bis 5,
**dadurch gekennzeichnet, dass** die Front-Absaugeinrichtung (68) als eine an der Oberseite des Gerätegehäuses (2) angeordnete Abzugshaube ausgebildet ist.

7. Vorrichtung nach einem der Ansprüche 1 bis 6,
**dadurch gekennzeichnet, dass** die Front-Absaugeinrichtung (68) ein Auffangteil (70) aufweist, welches an der die Öffnungen (6, 6`) zu den Garräumen (4) aufweisenden Front (26) und vorzugsweise an den Längsseiten (27) des Gerätegehäuses (2) absteht.

8. Vorrichtung nach mindestens einem der vorstehenden Ansprüche,
**dadurch gekennzeichnet, dass** die Heizeinrichtung (10) mindestens zwei Heizelemente (12, 14, 16) aufweist, wobei ein erstes Heizelement (12, 16) wenigstens einen Strahlungsheizkörper aufweist und das zweite Heizelement (14) wenigstens einen Konvektionsheizkörper umfasst.

9. Vorrichtung nach Anspruch 8,
**dadurch gekennzeichnet, dass** das erste Heizelement (12, 16) als Rohrheizkörper oder Infrarot-Strahler ausgebildet ist, wobei der Infrarot-Strahler bevorzugt dazu eingerichtet ist, gezielt Strahlung in eine Richtung abzugeben.

10. Vorrichtung nach Anspruch 8 oder 9,
**dadurch gekennzeichnet, dass** das zweite Heizelement (14) als Heißluftgebläse ausgebildet ist, das innerhalb des Garraumes (4) einen Umluftstrom erzeugt.

11. Vorrichtung nach mindestens einem der vorstehenden Ansprüche,
**gekennzeichnet durch** zwei Garräume (4) für zuzubereitende Lebensmittel, wobei jeder Garraum (4) einen in den Garraum einsetz- und entnehmbaren Aufnahmebehälter (8) für das Lebensmittel aufweist, wobei der Aufnahmebehälter (8) vorzugsweise drehbar aufgenommen ist.

12. Vorrichtung nach mindestens einem der vorstehenden Ansprüche
wobei vorzugsweise im Bodenbereich des Garraumes (4) oder unterhalb des Garraumes eine aus dem Gerätegehäuse (2) zumindest teilweise entnehmbare Auffangwanne (24) angeordnet ist und/oder ein den jeweiligen Garraum (4) abdichtend verschließendes Verschlussteil (20), welches bevorzugt an dem Aufnahmebehälter (8) vorgesehen ist.

13. Vorrichtung nach einem der vorstehenden Ansprüche,
**dadurch gekennzeichnet, dass** das Gerätegehäuse ein oder mehrere Luftein- und/oder - auslässe (28, 30, 30') aufweist und ein oder mehrere mit den Luftein- und/oder -auslässen (28, 30, 30') zusammenwirkende Lüfter (32, 34) zum Erzeugen eines Luftstromes zwischen der Innenseite des Gerätegehäuses (2) und der oder den im Gerätegehäuse angeordneten Garräumen (4) vorgesehen ist.

## Claims

1. Apparatus (1) for heating and/or cooking food products, in particular meat products and/or frozen products, having a device housing (2),
wherein the device housing (2) has at least one cooking space (4) for the food product, which are accessible via at least one opening (6, 6') in the device housing (2), and a receiving container (8) for the food product which corresponds to the respective cooking space (4) and which can be inserted into and removed from the cooking space, and a heating device (10) which is associated with the cooking space (4) and which has one or more heating elements (12, 14, 16),
wherein the cooking space (4) can be coupled in a fluid-guiding manner to at least one exhaust air cleaning device (42, 62) which is arranged inside the device housing (2) and a device (48) for controlling at least the exhaust air which is intended to be discharged from the cooking space(s) (4), **characterised in that** the exhaust air cleaning device (42, 62) has an electrostatic filter (56), a plasma chamber (58) and a sponge filter (54) which are arranged within an exhaust air channel (44) of the exhaust air cleaning device (42, 62), wherein the electrostatic filter (56) and/or the plasma chamber (58) and/or the sponge filter (54) can be removed from the exhaust air channel (44), and
**in that** at least one front suction device (68) which is associated with the openings (6, 6') in the device housing (2) is provided in order to draw off vapours which are discharged from the opening (6, 6') and is coupled to the exhaust air cleaning device (62) in the device housing (2) in a fluid-guiding manner.

2. Apparatus according to claim 1, **characterised in that** the electrostatic filter (56) has a plurality of electrically chargeable plate elements made of metal with non-corrosive properties.

3. Apparatus according to claim 1 or 2, **characterised in that** the sponge filter (54) is arranged upstream of the electrostatic filter (56) in the flow direction of the exhaust air.

4. Apparatus according to any one of the preceding claims, **characterised in that** the exhaust air cleaning device (42, 62) is arranged in a region, which is separated from the at least one cooking space (4), of the device housing (2).

5. Apparatus according to claim 4, **characterised in that** the device (48) for controlling the exhaust air has at least one controllable exhaust air flap which is configured to open and close in the cooking space (4) at least one outlet opening which is connected to the exhaust air channel (44).

6. Apparatus according to any one of claims 1 to 5, **characterised in that** the front suction device (68) is in the form of an extractor hood which is arranged at the upper side of the device housing (2).

7. Apparatus according to any one of claims 1 to 6, **characterised in that** the front suction device (68) has a collection portion (70) which protrudes at the front (26) which has the openings (6, 6') to the cooking spaces (4) and which preferably protrudes at the longitudinal sides (27) of the device housing (2).

8. Apparatus according to at least one of the preceding claims, **characterised in that** the heating device (10) has at least two heating elements (12, 14, 16), wherein a first heating element (12, 16) has at least one radiation heating member and the second heating element (14) comprises at least one convection heating member.

9. Apparatus according to claim 8, **characterised in that** the first heating element (12, 16) is in the form of a pipe heating member or infrared radiator, wherein the infrared radiator is preferably configured to selectively discharge radiation in one direction.

10. Apparatus according to claim 8 or 9, **characterised in that** the second heating element (14) is in the form of a hot air fan which produces a circulating air flow within the cooking space (4).

11. Apparatus according to at least one of the preceding claims, **characterised by** two cooking spaces (4) for food products which are intended to be prepared, wherein each cooking space (4) has a receiving container (8) which can be introduced into and removed from the cooking space (4) for the food product, wherein the receiving container (8) is preferably rotatably received.

12. Apparatus according to at least one of the preceding claims, wherein a collection vessel (24) which can be at least partially removed from the device housing (2) is arranged preferably in the base region of the cooking space (4) or below the cooking space and/or a closure portion (20) which closes the respective cooking space (4) in a sealing manner and which is preferably provided on the receiving container (8).

13. Apparatus according to any one of the preceding claims, **characterised in that** the device housing has one or more air inlets and/or outlets (28, 30, 30") and one or more fans (32, 34) which cooperate with the air inlets and/or outlets (28, 30, 30') in order to produce an air flow between the inner side of the device housing (2) and the cooking space(s) (4) which is/are arranged in the device housing.

## Revendications

1. Dispositif (1) de réchauffage et/ou de cuisson de produits alimentaires, en particulier de produits carnés et/ou de produits surgelés, avec
un boîtier d'appareil (2),
dans lequel le boîtier d'appareil (2) présente au moins un espace de cuisson (4) pour le produit alimentaire, lequel est accessible par l'intermédiaire d'au moins une ouverture (6, 6') dans le boîtier d'appareil (2), et un contenant de réception (8) pour le produit alimentaire pouvant être inséré dans l'espace de cuisson et pouvant en être retiré, correspondant à l'espace de cuisson (4) respectif, et
un système de chauffage (10) associé à l'espace de cuisson (4) avec un ou plusieurs éléments de chauffage (12, 14, 16),
dans lequel l'espace de cuisson (4) peut être couplé avec acheminement de fluides à au moins un système d'épuration d'air sortant (42, 62), lequel est disposé à l'intérieur du boîtier d'appareil (2) et présente un système (48) destiné à commander au moins l'air sortant à évacuer hors de l'espace de cuisson ou des espaces de cuisson (4),
**caractérisé en ce que** le système d'épuration d'air sortant (42, 62) présente un filtre électrostatique (56), une chambre à plasma (58) et un filtre mousse (54), qui sont disposés à l'intérieur d'un canal d'air sortant (44) du système d'épuration d'air sortant (42, 62), dans lequel le filtre électrostatique (56) et/ou la chambre à plasma (58) et/ou le filtre mousse (54) peuvent être retirés hors du canal d'air sortant (44), et
qu'au moins un système frontal d'évacuation par aspiration (68) associé aux ouvertures (6, 6') dans le boîtier d'appareil (2), destiné à évacuer par aspiration des vapeurs sortant de l'ouverture (6, 6') est prévu, lequel est couplé avec acheminement de fluides au système d'épuration d'air sortant (62) dans le boîtier d'appareil (2).

2. Dispositif selon la revendication 1, **caractérisé en ce que** le filtre électrostatique (56) présente plusieurs éléments de plaque rechargeables de manière électrique en métal avec des propriétés anticorrosion.

3. Dispositif selon la revendication 1 ou 2, **caractérisé en ce que** le filtre mousse (54) est installé en amont du filtre électrostatique (56) dans la direction d'écoulement de l'air sortant.

4. Dispositif selon l'une quelconque des revendications précédentes,
**caractérisé en ce que** le système d'épuration d'air sortant (42, 62) est disposé dans une zone, séparée de l'au moins un espace de cuisson (4), du boîtier d'appareil (2).

5. Dispositif selon la revendication 4,
**caractérisé en ce que** le système (48) destiné à commander l'air sortant présente au moins un clapet d'air sortant pouvant être piloté, lequel est mis au point pour ouvrir et pour fermer au moins une ouverture de sortie, reliée au canal d'air sortant (44), sur l'espace de cuisson (4).

6. Dispositif selon l'une quelconque des revendications 1 à 5,
**caractérisé en ce que** le système frontal d'évacuation par aspiration (68) est réalisé en tant qu'une hotte aspirante disposée sur le côté supérieur du boîtier d'appareil (2).

7. Dispositif selon l'une quelconque des revendications 1 à 6,
**caractérisé en ce que** le système frontal d'évacuation par aspiration (68) présente une partie de collecte (70), laquelle dépasse sur la partie frontale (26) présentant les ouvertures (6, 6') menant aux espaces de cuisson (4) et de préférence sur les côtés longitudinaux (27) du boîtier d'appareil (2).

8. Dispositif selon au moins l'une quelconque des revendications précédentes,
**caractérisé en ce que** le système de chauffage (10) présente au moins deux éléments de chauffage (12, 14, 16), dans lequel un premier élément de chauffage (12, 16) présente au moins un corps de chauffage à rayonnement et le deuxième élément de chauffage (14) présente au moins un corps de chauffage à convection.

9. Dispositif selon la revendication 8, **caractérisé en ce que** le premier élément de chauffage (12, 16) est réalisé en tant que corps de chauffage à tubes ou émetteur d'infrarouges, dans lequel l'émetteur d'infrarouges est mis au point de manière préférée pour émettre de manière ciblée un rayonnement dans une direction.

10. Dispositif selon la revendication 8 ou 9, **caractérisé en ce que** le deuxième élément de chauffage (14) est réalisé en tant que soufflante d'air chaud, qui génère un flux d'air de circulation à l'intérieur de l'espace de cuisson (4).

11. Dispositif selon au moins l'une quelconque des revendications précédentes,
**caractérisé par** deux espaces de cuisson (4) pour des produits alimentaires à préparer, dans lequel chaque espace de cuisson (4) présente un contenant de collecte (8) pour le produit alimentaire pouvant être inséré dans l'espace de cuisson et pouvant en être retiré, dans lequel le contenant de collecte (8) est reçu de préférence de manière à pouvoir tourner.

12. Dispositif selon au moins l'une quelconque des revendications précédentes,
dans lequel de préférence une cuve de collecte (24) pouvant être retirée au moins en partie hors du boîtier d'appareil (2) est disposée de préférence dans la zone de fond de l'espace de cuisson (4), ou sous l'espace de cuisson, et/ou une partie de fermeture (20) fermant de manière hermétique l'espace de cuisson (4) respectif est prévue de manière préférée sur le contenant de réception (8) .

13. Dispositif selon l'une quelconque des revendications précédentes,
**caractérisé en ce que** le boîtier d'appareil présente une ou plusieurs entrées et/ou sorties d'air (28, 30, 30') et un ou plusieurs ventilateurs (32, 34) coopérant avec les entrées et/ou sorties d'air (28, 30, 30') sont prévus pour générer un flux d'air entre le côté intérieur du boîtier d'appareil (2) et l'espace ou les espaces de cuisson (4) disposés dans le boîtier d'appareil.
